# EUROPEAN PATENT APPLICATION

(11) **EP 4 407 281 A1**
(43) Date of publication of application: **31.07.2024**
(21) Application number: 23153968.5
(22) Date of filing: 30.01.2023
(51) Int. Cl.: G01F 23/292, G01N 35/10, G01N 15/05, G01N 21/25

(54) **APPARATUS FOR MEASURING A FILLING LEVEL OF A SAMPLE CONTAINER**

(71) Applicant: Roche Diagnostics GmbH, 68305 Mannheim (DE); F. Hoffmann-La Roche AG, 4070 Basel (CH)
(72) Inventor: Sauer, Benjamin, 71638 Ludwigsburg (DE)
(74) Representative: Patentanwälte Ruff, Wilhelm, Beier, Dauster & Partner mbB

(57) **Abstract**

The invention relates to an apparatus (1) for measuring a filling level of a sample container via laser transmission detection, the apparatus (1) comprising a laser source arrangement (2) for emitting light (L) of two distinctive wavelengths (A, B), a fiber optic (3) for guiding the light (L) emitted by the laser source arrangement (2), the fiber optic (3) extending from a first fiber portion (3) to a second fiber portion (5), the latter of which having a fiber ending (6) directed onto a target position (T) of the apparatus (1), such that a beam path (P) for light (L) leaving the fiber ending (6) is spanned toward the target position (T), a sample holder (7) for holding the sample container within the beam path (P), and a light transmission detector (D) for detecting light (L) reaching the target position (T) along the beam path (P), the light (L) reaching the target position (T) being transmitted by the sample container and/or a content thereof when placed within the beam path (P).

## Description

The invention relates to an apparatus for measuring a filling level of a sample container via laser transmission detection.

An apparatus for measuring a filling level of a sample container via laser transmission detection is disclosed in EP 2 770 317 A1. The apparatus is adapted for determining a vertical position of at least one interface between a first component and at least one second component, the components being contained in different layers in the sample container. The interface can represent a filling level of the sample container with respect to the heavier one of the components meeting at the interface. The known apparatus has a first laser source and a first light detector as well as a second laser source and a second light detector. The first and the second light detector are arranged at a vertical distance relative to one another and at a horizontal distance to the laser sources. The laser sources are spaced apart from one another vertically and in horizontal alignment with one of the light detectors, respectively. The sample container can be placed within the horizontal distance so that light emitted by the laser sources transmits the sample container before being detected by the light detectors. Due to the light detectors as well as the laser sources being spaced apart from one another vertically, measurement of transmission of the light emitted by the first and the second laser source, respectively, is taken at different spots of the sample container and/or a content thereof.

It is an object of the invention to provide an apparatus for measuring a filling level of a sample container via laser transmission detection enabling improvement of precision in the measurement of the filling level of the sample container.

This object is solved by the subject matter of claim 1. Preferred embodiments are subject matter of the dependent claims.

An apparatus according to the invention is adapted for measuring a filling level of a sample container via laser transmission detection. The apparatus comprises a laser source arrangement which is adapted for emitting light of two distinctive wavelengths. The apparatus furthermore has a fiber optic for guiding the light emitted by the laser source arrangement. The fiber optic extends from a first fiber portion to a second fiber portion, in particular lengthwise. The second fiber portion of the fiber optic has a fiber ending which is directed onto a target position of the apparatus. The fiber ending may have an end face of the fiber optic. Therein, the fiber ending is directed on the target position so that a beam path for light leaving the fiber ending is spanned toward the target position. The apparatus comprises a sample holder for holding the sample container within the beam path. In particular, the sample holder can hold the sample container within the beam path such that the sample container is arranged in between the fiber ending and the target position in line along the beam path. The apparatus furthermore comprises a, in particular single, light transmission detector for detecting light reaching the target position along the beam path. Light reaching the target position is transmitted by the sample container and/or a content thereof when the sample container and/or a content thereof are placed within the beam path. It goes without saying that only light of a wavelength not completely absorbed, reflected or scattered by the sample container and/or its content can reach the target position when the sample container is placed within the beam path.

The content of the sample container may comprise at least two components. For instance, a first component may be a liquid and a second component may be a gas, in particular air, floating on top of the liquid. The filling level therein can be understood as an interface between both the first and the second component. In other words: The components can be contained by the sample container in different layers stacked on top of one another. Preferably, the sample container is transparent, in particular for light of both of the two distinctive wavelengths emitted by the laser source arrangement. The sample container can be a sample tube as conventionally used in automated laboratory instrumentation. For example, the apparatus can detect horizontal interfaces between different layers within a centrifuged sample tube containing blood, such as interfaces between a serum or plasma layer and either a separation medium layer or a cruor (blood cell) layer. For example, light of the first wavelength can be substantially transmitted by the sample container and the first component, whereas light of the second wavelength can be substantially transmitted by the sample container but blocked or absorbed by the first component. This allows for detection of a change in transmission along a vertical direction of the sample container. The location of said change in transmission mirrors the filling level to be measured by the apparatus. Advantageously, the fiber optic allows for aiming both light of the first and the second wavelength onto the same spot of the sample container in alignment with the target position along the beam path. In this way, particularly precise, easy and efficient measurement is enabled, in particular in contrast to the apparatus known from the state of the art which requires correction of the vertical distance between its two light transmission detectors and its two laser sources.

According to an embodiment of the invention, the apparatus has a driving device for moving the sample holder with respect to the target position so that light propagating along the beam path can scan the sample container held by the sample holder. In addition or alternatively, the driving device may be adapted for moving the fiber ending and/or the target position with respect to the sample holder. In particular, the sample holder can be moved by the driving device, preferably along a vertical direction following gravity, as to scan the sample container, in particular linearly. Preferably, in this way, the sample container can be scanned lengthwise. By moving the sample holder relative to the target position, several interfaces between several layers of components contained by the container can be detected.

According to another embodiment of the invention, the laser source arrangement comprises a single laser source for emitting light of a single specific wavelength. Furthermore, the laser source arrangement comprises a frequency doubling fiber or a non-linear optic for transforming the light emitted by the single laser source into the light of two distinctive wavelengths then to be emitted by the laser source arrangement. This can enable exploitation of substantial cost benefits since only one single laser source is needed for generating light of the two distinctive wavelengths by the laser source arrangement, in particular the single laser source solely allowing for perfect alignment of the laser on the single beam path.

According to another embodiment of the invention, the laser source arrangement further comprises a dispersive element for controlling the wavelength of the light emitted by the laser source arrangement. Therein, the frequency doubling fiber or the non-linear optic is arranged in line between the single laser source and the dispersive element. The dispersive element is configured to control the wavelength of the light, in particular of light pulses of respective wavelengths, emitted by the laser source arrangement such that, one after another, light of a first and light of a second wavelength can be emitted by the laser source arrangement, in particular for a certain interval of time in each case. This allows for mutual adjustment of a velocity at which the sample holder can be moved relative to the target position and of a frequency at which light of the first and the second wavelength are emitted sequentially by the laser source arrangement.

According to another embodiment of the invention, the laser source arrangement has two separate laser sources one of which is adapted for emitting light of the first and the second wavelength, respectively. In other words: A first of the two separate laser sources can emit light, in particular only, of the first wavelength, whereas a second of the two separate laser sources, can, in particular only, emit light of the second wavelength. It goes without saying that the laser source arrangement having a single laser source is an alternative to the laser source arrangement having two separate laser sources. As an advantage, by having two separate laser sources, a dispersive element, a frequency doubling fiber or a non-linear optic can be foregone.

According to another embodiment of the invention, the apparatus comprises two fiber elements each of which is assigned one of the two separated laser sources as to guide the light emitted by the separate laser sources toward the first fiber portion. In other words: the first fiber portion can optically communicate with a first of the two separate laser sources via a first of the two fiber elements, whereas the first fiber portion can optically communicate with a second of the two separate laser sources via a second of the two fiber elements. Additionally or as an alternative, the apparatus comprises a mirror arrangement including at least one dichroic mirror which is reflective for light of the first wavelength, and which is transmissive for light of the second wavelength. Therein the dichroic mirror is arranged in between the first fiber portion on the one hand and both of the separate laser sources on the other hand. The mirror arrangement allows for a particular compact build of the apparatus and may reduce an influence of a common fiber part on one of the particular wavelengths.

Further advantages and features of the invention arise from the claims as well as from the following description of preferred embodiments of the invention, which are depicted by the drawings. Therein, equal reference signs relate to equal or similar or functionally equal components.

It is to be understood that the features mentioned above as well as the features described below are not only usable in the stated combination, respectively, but also in other combinations or solely, without leaving the frame of the present invention.
- Fig. 1: schematically depicts a layout of an embodiment of an apparatus according to the invention,
- Fig. 2: schematically illustrates a layout of another embodiment of an apparatus according to the invention, and
- Fig. 3: schematically shows a layout of another embodiment of an apparatus according to the invention.

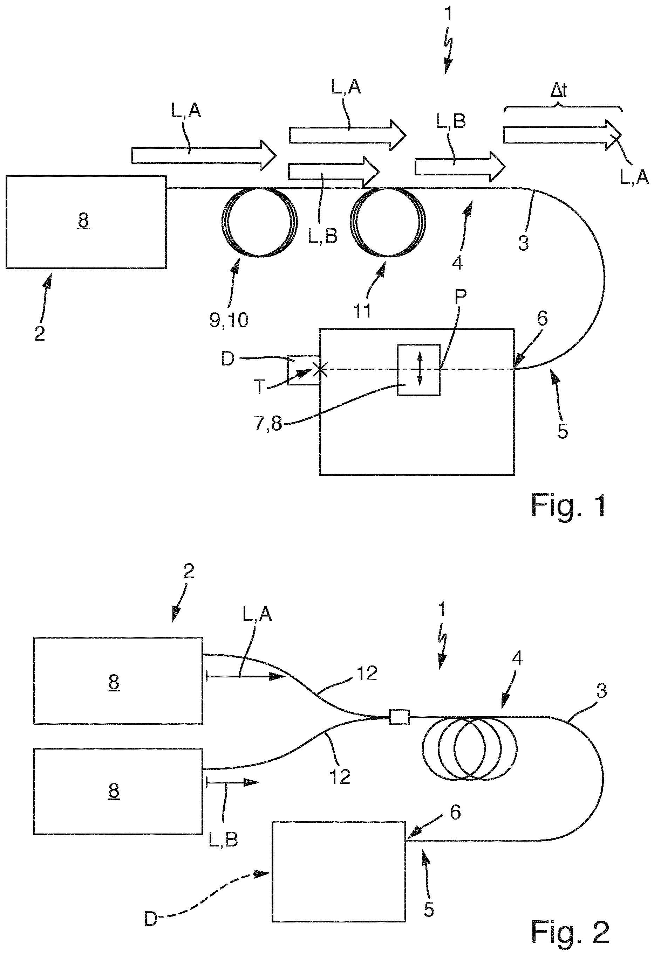

An apparatus 1 according to the invention as schematically illustrated in figs. 1 to 3 is adapted for measuring a filling level of a sample container via laser transmission detection. The apparatus 1 may be used in an automated laboratory, in which sample containers containing centrifuged blood samples can be processed. The blood samples may be separated into serum and cruor (blood cells) by a separating medium. The apparatus 1 therein is adapted to determine a vertical position of interfaces between the cruor, the serum and air on top of the serum. The cruor, the serum and the air form components, respectively, being contained in different layers on top of one another in the sample container. The components defer from one another in their optical properties. In particular, the components differ from one another in their transparency for light of different wavelengths. For instance, light of a first wavelength is substantially transmitted by a first of the components, whereas light of a second wavelength is substantially transmitted by a second of the components but blocked by the first component. Each of the components may thus be transparent for light of a wavelength which is absorbed by at least one or all of the other components.

The apparatus 1 has a laser source arrangement 2. The laser source arrangement 2 is adapted for emitting light L of two distinctive wavelengths A, B. The apparatus 2 comprises a fiber optic 3 being adapted to guide light L emitted by the laser source arrangement 2. Therein, the fiber optic 3 extends from a first fiber portion 4 to a second fiber portion 5. The second fiber portion 5 comprises a fiber ending 6 which is directed onto a target position T of the apparatus 1. The fiber ending 6 is directed onto the target position T so that a beam path P for light L leaving the fiber ending 6 is spanned toward the target position T. The fiber optic 3 is adapted to transmit light L of each wavelength A, B emitted from the laser source arrangement 2. Light L leaving the fiber ending 6 can propagate along the beam path P toward the target position T. The apparatus 1 furthermore comprises a sample holder 7 which is adapted for holding the sample container within the beam path P. The sample container held by the sample holder 7 can be arranged in between the fiber ending 6 and the target position T. The apparatus 1 also has a, in particular single, light transmission detector D for detecting light L reaching the target position T along the beam path P. Therein, the light L reaching the target position T is transmitted by the sample container and/or a content thereof when placed within the beam path P. The content of the sample container may be any of the components mentioned above.

For example, the apparatus 1 has a driving device 8 being adapted to move the sample holder 7 with respect to the target position T. The sample holder 7 can be moved by the driving device 8 so that light propagating along the beam path P can scan the sample container held by the sample holder 7. For instance, the light L propagating from the fiber ending 6 along the beam path P toward the target position T scans the sample holder held by the sample holder 7, in particular linearly. In other words, a beam of the light L leaving the fiber ending 6 toward the target position T can be moved along the sample container held by the sample holder 7. Since the sample container held by the sample holder 7 is positioned within the beam path P, light L propagating the beam path P will hit the sample container. Light L propagating along the beam path P may hit the sample container substantially perpendicularly or tilted by an angle of 88 to 92 degrees with respect to a lengthwise extension of the sample container. The lengthwise extension of the sample container may be aligned vertically. Preferably, the sample container itself is substantially transparent for light L of all distinctive wavelengths A, B emitted by the laser source arrangement 2 and sent toward the target position T by the fiber optic 3.

In the embodiment of fig. 1, the apparatus 1 comprises a single laser source 8 for emitting light L of a single specific wavelength A. Furthermore, the apparatus 1 has a frequency doubling fiber 9 or a non-linear optic 10 for transforming the light L emitted by the single laser source 8 into the light L of two distinctive wavelengths A, B, said light L of two distinctive wavelengths A, B to be then emitted by the laser source arrangement 2. For example, the laser source arrangement 2 further comprises a dispersive element 11. The dispersive element 11 is adapted for controlling the wavelengths A, B of the light L emitted by the laser source arrangement 2. Therein, the frequency doubling fiber 9 or the non-linear optic 10 is arranged in line between the single laser source 8 and the dispersive element 11. The dispersive element 11 is configured to control the wavelengths A, B of the light L emitted by the laser source arrangement 2, so that one after another light L of a first wavelength A and light L of a second wavelength B can be emitted by the laser source arrangement 2. In particular, light L of each wavelength A, B can be emitted for a predetermined interval of time Δt at a predetermined frequency.

According to the embodiment of fig. 2, the laser source arrangement 2 has two separate laser sources 8. One of these separate laser sources 8 is adapted for emitting light L of a first wavelength A. The other of these two separate laser sources 8 is adapted for emitting light L of a second wavelength. The two separate laser sources 8 may be operated as to send light L of the first and the second wavelength A, B sequentially through the fiber optic 3 in the direction of the target position T. Therein, the apparatus 1 has two fiber elements 12. Each of these two fiber elements 12 is assigned one of the two separate laser sources 8. The light L emitted by the separate laser sources 8 is guided by both the fiber elements 12 toward the first fiber portion 4 of the fiber optic 3.

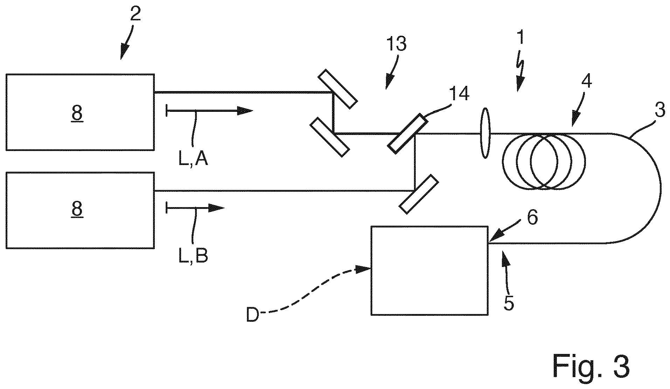

Similar to the embodiment of fig. 2 the embodiment of fig. 3 has two separate laser sources 8. In contrast, however, the apparatus 1 of the embodiment according to fig. 3 does not have two fiber elements 12 as present in the embodiment of fig. 2. Instead, the apparatus 1 according to fig. 3 comprises a mirror arrangement 13. The mirror arrangement 13 includes at least one dichroic mirror 14 which is reflective for light L of the first wavelength A, and which is transmissive for light L of the second wavelength B. Therein, the dichroic mirror 14 is arranged in between the first fiber portion 4 and both of the separate laser sources 8. A first functional side of the dichroic mirror 14 faces the first fiber position 4, and a second functional side faces both the separate laser sources 8. The functional sides are arranged opposite one another. In addition to the dichroic mirror 14, the mirror arrangement 13 may comprise further mirrors for guiding light L of the first wavelength A and/or the second wavelength B from the separate laser sources 8 towards the first fiber portion 4.

In another embodiment not shown in the figures, two separate laser sources 8, two fiber elements 12 and a mirror arrangement 13 as described above may be present.

## Claims

1. Apparatus (1) for measuring a filling level of a sample container via laser transmission detection, the apparatus (1) comprising
- a laser source arrangement (2) for emitting light (L) of two distinctive wavelengths (A, B),
- a fiber optic (3) for guiding the light (L) emitted by the laser source arrangement (2), the fiber optic (3) extending from a first fiber portion (4) to a second fiber portion (5), the latter of which having a fiber ending (6) directed onto a target position (T) of the apparatus (1), such that a beam path (P) for light (L) leaving the fiber ending (6) is spanned toward the target position (T),
- a sample holder (7) for holding the sample container within the beam path (P), and
- a light transmission detector (D) for detecting light (L) reaching the target position (T) along the beam path (P), the light (L) reaching the target position (T) being transmitted by the sample container and/or a content thereof when placed within the beam path (P).

2. Apparatus (1) according to claim 1, **characterized in that**
the apparatus (1) has a driving device (8) for moving the sample holder (7) with respect to the target position (T) so that light (L) propagating along the beam path (P) can, in particular linearly, scan the sample container held by the sample holder (7).

3. Apparatus (1) according to any of the preceding claims, **characterized in that**
the laser source arrangement (2) comprises
- a single laser source (8) for emitting light (L) of a single specific wavelength (A),
- a frequency doubling fiber (9) or a non-linear optic (10) for transforming the light (L) emitted by the single laser source (8) into the light (L) of two distinctive wavelengths (A, B) to be emitted by the laser source arrangement (2).

4. Apparatus (1) according to claim 3, **characterized in that**
- the laser source arrangement (2) further comprises a dispersive element (11) for controlling the wavelength (A, B) of the light (L) emitted by the laser source arrangement (2),
- the frequency doubling fiber (9) or the non-linear optic (10) being arranged in line between the single laser source (8) and the dispersive element (11), and
- the dispersive element (11) being configured to control the wavelength (A, B) of the light (L) emitted by the laser source arrangement (2), so that one after another light (L) of a first and light (L) of a second wavelength (A, B) can be emitted by the laser source arrangement (2).

5. Apparatus (1) according to claim 1 or 2, **characterized in that**
the laser source arrangement (2) has two separate laser sources (8) one of which for emitting light (L) of a first and a second wavelength (A, B), respectively.

6. Apparatus (1) according to claim 5, **characterized in that**
- the apparatus (1) comprises two fiber elements (12) each of which being assigned one of the two separate laser sources (8) as to guide the light (L) emitted by the separate laser sources (8) toward the first fiber portion (4) and/or **in that**
- the apparatus (1) comprises a mirror arrangement (13) including at least one dichroic mirror (14) being reflective for light (L) of the first wavelength (A) and being transmissive for light (L) of the second wavelength (B), the dichroic mirror (14) being arranged in between the first fiber portion (4) on the one hand and both of the separate laser sources (8) on the other hand.
